# EUROPEAN PATENT APPLICATION

(11) **EP 1 760 934 A2**
(43) Date of publication of application: **07.03.2007**
(21) Application number: 06118277.0
(22) Date of filing: 01.08.2006
(51) Int. Cl.: H04L 12/18

(54) **System, method and computer program product for managing the progress of a conference**

(30) Priority: 03.08.2005 JP 2005225601
(71) Applicant: Pioneer Corporation, Meguro-ku, Tokyo (JP)
(72) Inventor: Fukeda, Itsuro c/o Pioneer Corporation, Tokyo (JP); Ota, Izumi c/o Pioneer Corporation, Tokyo (JP); Nakayama, Gen c/o Pioneer Corporation, Tokyo (JP); Kawakubo, Toru c/o Pioneer Corporation, Tokyo (JP); Kita, Kenichi c/o Pioneer Corporation, Tokyo (JP); Kusano, Satoshi c/o Pioneer Corporation, Tokyo (JP)
(74) Representative: Skuhra, Udo

(57) **Abstract**

A conference support system for managing progress of a conference about a plurality of conference subjects includes: a display unit that displays a progress of the conference; and a control unit that controls the display unit. The control unit includes: an agenda preparing part that presets scheduled proceeding times necessary for proceedings of the conference subjects and prepares a timetable of the conference; a progress display control part that controls the display unit to display an index indicating elapsed times of the conference subjects; a progress check part that detects an end of the proceeding of each of the conference subjects and controls the display unit to display the index so as to correspond to a next conference subj ect; and a scheduled time adjustment part that distributes a remaining time to a remaining conference subject when the proceeding of one of the conference subjects ends.

## Description

### BACKGROUND OF THE INVENTION

### 1. Field of the Invention

The present invention relates to a conference support system for managing a conference such as a television conference or an electronic conference, and particularly to a conference support system for managing progress of the conference.

### 2. Description of the Related Art

In a conference support system for connecting plural terminals for conference through a network or a leased line and conferring with remote participants, various proposals for efficiently managing a conference have been made. For example, there is a system for reporting a progress of a conference based on a previously inputted schedule. Also, for example there is a multipoint television conference system in which order of proceedings inputted from a chairman terminal is recorded in an image frame memory and an order of proceedings recorded is displayed on a screen of each of the television conference terminals and based on time distribution information, a bar graph extending according to an elapsed time is superimposed on the screen on which the order of proceedings is displayed and the bar graph is displayed on a part of the screen of the television conference terminal of each point (for example, see JP-A-5-30506 (Pages 2 and 3, Fig. 1)).

### SUMMARY OF THE INVENTION

The television conference system described above allows users to grasp a progress of each subject with respect to schedules by displaying a bar graph, but to grasp the progress only when proceedings progress in order of preset subjects. However, the television conference systemdoes not cope flexibly with a state which may frequently occur during the conference. That is, in an actual conference, there are cases where a proceeding does not end within a scheduled proceeding time or order of subjects is changed on the way. In those situations, the television conference system does not notify the change or change display according to the situations.

Generally, when progress of a certain subject delays and scheduled proceeding time is exceeded, for example, a chairman properly changes time distribution of subsequent subjects. However, such time adjustment work by hand is troublesome and also conference managing may depend largely on quality of the adjustment so that a burden on the chairman is heavy.

The present invention has been made in view of the above circumstances and provides a conference support system, a conference support method and a program product. According to an aspect of the invention, the conference support system may solve, for example, a problem that notification cannot be provided or display cannot be changed or a problem that a burden on a chairman is heavy because time adjustment work by hand is troublesome in the case of changing order of subjects on the way or ending earlier than scheduled proceeding time or the case where progress delays and scheduled proceeding time is exceeded.

According to another aspect of the invention, there is provided a conference support system for managing progress of a conference about a plurality of conference subjects. The conference support system includes : a displayunit that displays a progress of the conference; and a control unit that controls the display unit according to the progress of the conference. The control unit includes: an agenda preparing part that presets scheduled proceeding times necessary for proceedings of the conference subj ects and prepares a timetable of the conference; a progress display control part that controls the display unit to display an index indicating elapsed times of the conference subjects; a progress check part that detects an end of the proceeding of each of the conference subjects and controls the display unit to display the index so as to correspond to a next conference subject; and a scheduled time adjustment part that distributes a remaining time to a remaining conference subject when the proceeding of one of the conference subjects ends.

According to still another aspect of the invention, there is provided a conference support method for managing a progress of a conference about a plurality of conference subjects. The conference support method includes: presetting scheduled proceeding times necessary for proceedings of the conference subj ects andpreparing a timetable of the conference; displaying an index indicating elapsed times of the conference subjects; detecting an end of the proceeding of each of the conference subjects and displaying the index so as to correspond to a next conference subject; and distributing a remaining time to a remaining conference subject when the proceeding of one of the conference subjects ends.

According to a further aspect of the invention, there is provided a computer program product for enabling a computer to manage progress of conference about a plurality of conference subjects including: software instructions for enabling the computer to perform predetermined operations, and a computer readable medium bearing the software instructions. The predetermined operations include: presetting scheduled proceeding times necessary for proceedings of the conference subj ects andpreparing a timetable of the conference; displaying an index indicating elapsed times of the conference subjects; detecting an end of the proceeding of each of the conference subjects and displaying the index so as to correspond to a next conference subject; and distributing a remaining time to a remaining conference subject when the proceeding of one of the conference subjects ends.

### BRIEF DESCRIPTION OF THE DRAWINGS

Embodiments of the present invention will be described in detail based on the following figures, wherein:
Fig. 1 is a diagram showing a configuration of a conference support system according to an embodiment of the invention;
Fig. 2 is a flowchart showing a progress management procedure of proceeding of the conference support system according to the embodiment of the invention;
Fig. 3 is a schematic diagram showing a screen display example of a timetable after the completion of input;
Fig. 4 is a schematic diagram showing a display example of a progress management screen of proceeding;
Fig. 5 is a schematic diagram showing a screen display example of the case of changing order or time, etc. of a proceeding by input of an operator (the case of adding a subject);
Fig. 6 is a schematic diagram showing a screen display example of the case of changing order or time, etc. of a proceeding by input of an operator (the case of changing order by upward moving a subject);
Fig. 7 is a schematic diagram showing a screen display example of the case of changing order or time, etc. of a proceeding by input of an operator (the case of changing order by downward moving a subject);
Fig. 8 is a schematic diagram showing a screen display example of the case of changing order or time, etc. of a proceeding by input of an operator (the case of deleting a subject);
Fig. 9 is a flowchart showing a scheduled proceeding time adjustment procedure of the case where scheduled proceeding times of the remaining subjects decrease;
Fig. 10 is a flowchart showing a scheduled proceeding time adj ustment procedure of the case where scheduledproceeding times of the remaining subjects decrease;
Fig. 11 is a flowchart showing a scheduled proceeding time adjustment procedure of the case where scheduledproceeding times of the remaining subjects decrease;
Fig. 12 is a flowchart showing a scheduled proceeding time adj ustment procedure of the case where scheduledproceeding times of the remaining subjects decrease;
Fig. 13 is a flowchart showing a scheduled proceeding time adjustment procedure of the case where scheduledproceeding times of the remaining subjects decrease;
Fig. 14 is a flowchart showing a scheduled proceeding time adjustment procedure of the case where scheduled proceeding times of the remaining subjects decrease;
Fig. 15 is a diagram conceptually showing a setting example of a distribution ratio of decrease time and a priority of a subject;
Fig. 16 is a flowchart showing a scheduled proceeding time adjustment procedure of the case where a surplus is generated in scheduled proceeding times of the remaining subjects;
Fig. 17 is a flowchart showing a scheduled proceeding time adjustment procedure of the case where a surplus is generated in scheduled proceeding times of the remaining subjects;
Fig. 18 is a flowchart showing a scheduled proceeding time adjustment procedure of the case where a surplus is generated in scheduled proceeding times of the remaining subjects;
Fig. 19 is a flowchart showing a scheduled proceeding time adjustment procedure of the case where a surplus is generated in scheduled proceeding times of the remaining subjects;
Fig. 20 is a schematic diagram showing a display example of a progress management screen of proceeding; and
Fig. 21 is a diagram conceptually showing a setting example of a distribution ratio of surplus time and a priority of a subject.

### DETAILED DESCRIPTION OF THE INVENTION

A conference support system according to an embodiment of the invention will be described below in detail with reference to the drawings. In addition, the same numerals are assigned to components having the same functions in all the drawings for describing the embodiment.

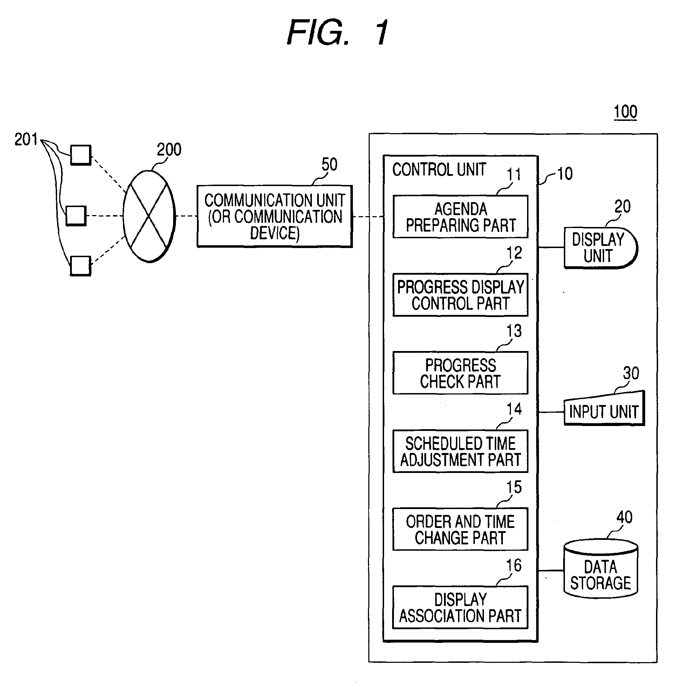

Fig. 1 is a diagram showing a configuration of a conference support system according to the embodiment of the invention. A conference support system 100 includes a control unit 10, a display unit 20, an input unit 30, a data storage 40, etc.

The control unit 10 is constructed of, for example, a CPU and controls a whole operation of the conference support system 100. A publicly known electronic conference functions etc. are implemented by this control unit 10. The display unit 20 is constructed of, for example, a PDP or a liquid crystal display and performs various display of a progress etc. of a conference. The input unit 30 is constructed of, for example, a keyboard or a mouse and makes various settings etc. about a conference by receiving an input of an operator. The data storage 40 is constructed of, for example, an HDD and stores document data etc. used in an electronic conference.

Also, the conference support system 100 of the embodiment may include a communication unit 50 capable of communicating with a remote base etc. or may be configured so that connection to a communication device can be made. It can be applied to an electronic conference system for implementing a network conference by making connection to at least one conference terminal 201 installed in another base etc. through a network 200 or a leased line, etc. by this communication unit 50 (or the communication device).

The control unit 10 further includes an agenda preparing part 11, a progress display control part 12, a progress check part 13, a scheduled time adjustment part 14, an order and time change part 15 and a display association part 16.

The agenda preparing part 11 receives an input from the input unit 30 and makes setting about a schedule of a conference. Setting items include a subject item, scheduled proceeding time distributed every subject item, start time of a conference, etc. and this agenda preparing part 11 automatically prepares a timetable based on these settings. Details of the timetable will be described below.

The progress display control part 12 performs control for displaying a progress of a conference on the display unit 20. Progress of each subject is displayed by a bar extending according to a lapse of time. When an end of a proceeding of a subject exceeds the corresponding scheduled proceeding time, notification of excess of time is provided by, for example, changing a color of bar display from green to red.

The progress check part 13 detects a predetermined input from the input unit 30 and performs processing of a shift to the next subject. The predetermined input means that, for example, an operator depresses a preset "subject end button" (not shown in the drawing), and it is determined that the subj ect at that point in time is "proceeding end". Also, when there is no next subject, end processing of the conference is performed.

The scheduled time adjustment part 14 again computes time distribution of the remaining subj ects according to a difference between scheduled proceeding time and the scheduled proceeding time of the subj ects which have already ended, and automatically adjusts the scheduled proceeding time. Details of an adjustment method will be described below.

The order and time change part 15 changes scheduled proceeding time of subjects or order of subjects preset by the agenda preparing part 11. The change is made based on instructions of an operator inputted through the input unit 30.

The display association part 16 associates a screen displayed in a proceeding of a subject, that is, document data with the subj ect. The document data is stored in the data storage 40.

Next, operations of the conference support system of the above configuration will be described.

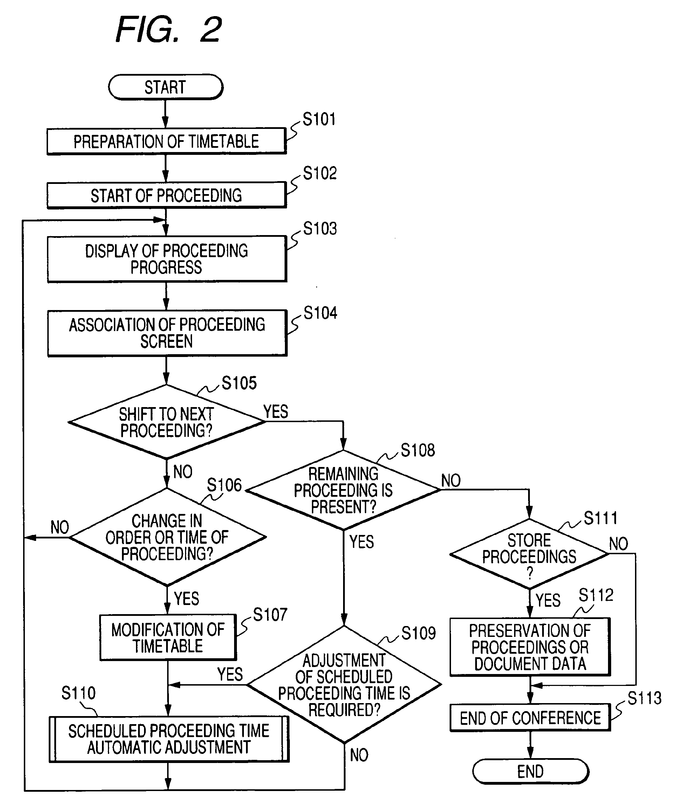

Fig. 2 is a flowchart showing a progress management operation procedure of proceeding of the conference support system according to the embodiment of the invention. When an operator of the conference support system 100 first inputs, for example, scheduled proceeding time every subject and subjects of a conference held from now through the input unit 30, the agenda preparing part 11 prepares a timetable about the conference and displays the timetable on the display unit 20 (step S101). In addition, it is preferable to do input using a GUI (graphical user interface) screen in which it is easy for an operator to do input.

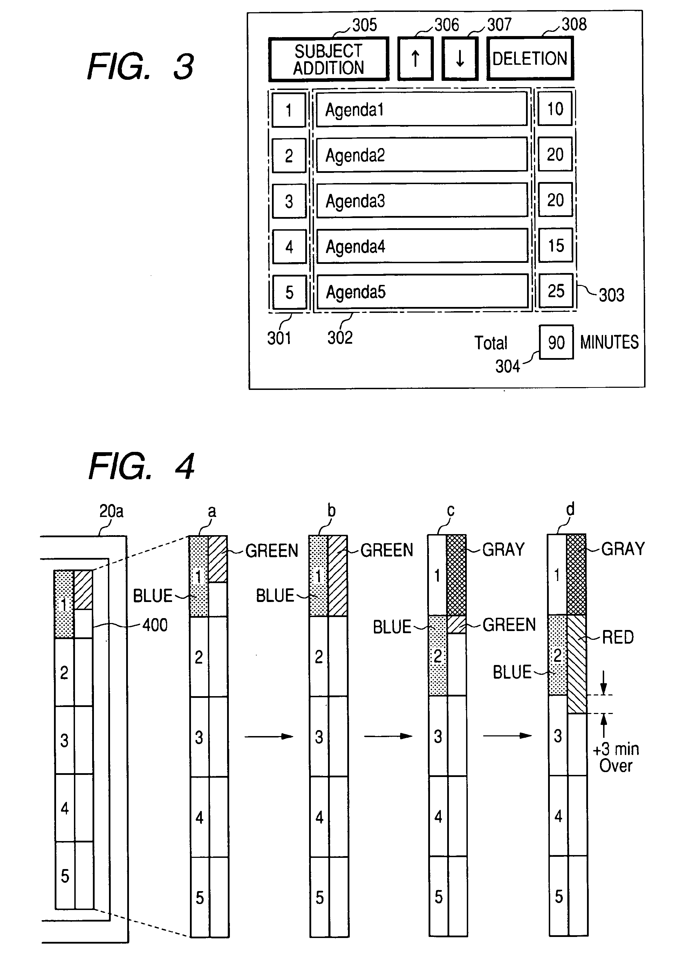

Fig. 3 is a schematic diagram showing a screen display example of a timetable after the completion of input. The timetable includes, for example, an order field 301, a subject field 302 and a scheduled proceeding time field 303, and the order and scheduled proceeding time can be set every subject. Also, time necessary for the whole conference is displayed in a total time field 304 as the sum of scheduled proceeding times of every subject.

Further, a subj ect addition button 305, an upwardmovement button 306 of a subject, a downward movement button 307 of a subject, a deletion button 308 of a subject, etc. are displayed on a screen, and operations of addition of a subject, change in order and time, deletion of a subject, etc. can be performed. Particularly, when the display unit 20 is equipped with a touch panel function, an operation can be performed directly on the screen. In addition, concrete operations of change in order and time, deletion of a subject, etc. will be described below.

Then, when a conference is held after the completion of creation of a timetable by the agenda preparing part 11 (step S102), the progress display control part 12 sequentially displays a progress state of proceeding according to a lapse of time on the display unit 20 (step S103).

Fig. 4 is a schematic diagram showing a display example of a progress management screen of proceeding. Using a conference start as a trigger, the progress display control part 12 displays a progress state indicator 400 divided every agenda (subject) as an index on the right end 20a of the progress management screen of the display unit 20. In addition, a to d are various display states of the progress state indicator 400.

For example, in the right side of a subject in proceeding progress at present, a lapse of scheduled proceeding time about the subject is shown by colored display. That is, in Fig. 4, for example, the case of being within the scheduled proceeding time is shown by green (a place of "Green") and the case of excess of time is shown by red (a place of "Red"). In the progress management screen shown in Fig. 4, the first subject is in proceeding progress at present and about a half of the scheduled proceeding time has elapsed and the progress state indicator 400 is in a display state of a.

At a point in time when the time has elapsed further and the first subject has just ended, the progress state indicator 400 changes to a display state of b. Then, when a proceeding of the second subject progresses, it changes to a display state of c, and a display state of the case where the second subject exceeds time is d. Also, it may be constructed so that, for example, a subject in proceeding progress is shown by blue (a place of "Blue") and proceeding time of the ended subject is shown by gray (a place of "Gray").

In addition, it goes without saying that the progress state indicator 400 maybe displayed in any region of the screen.

Then, the display association part 16 associates a screen displayed on the display unit 20 in a subject in proceeding progress at present, that is, document data with the subject (step S104). By the association, screen data stored by a procedure described below can be extracted or retrieved using a subject (or corresponding number etc.) as a key.

Then, the progress check part 13 determines whether or not the present subject ends and shifts to the next subject (step S105).

When a shift to the next subject is not detected (N), the order and time change part 15 determines the presence or absence of a change in order or time of a proceeding (step S106), and when the order or time, etc. of a proceeding are changed (Y), the timetable is modified (step S107).

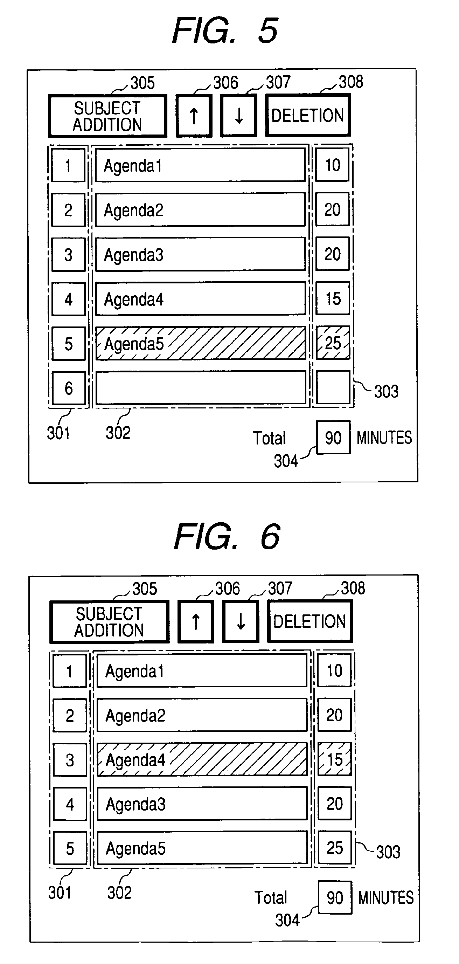

Figs. 5 to 8 are schematic diagrams showing a screen display example of the case of changing order or time, etc. of a proceeding by input of an operator. In addition, in the drawings, a specified subject is shown by hatching (the same applies hereinafter).

First, in the case of adding a subject in progress of a proceeding, when an operator having chairman authority has the timetable shown in Fig. 3 displayed on the display unit 20 by a predetermined operation and depresses the subject addition button 305 in a selected line, the order and time change part 15 adds a new agenda input line to a lower portion of the line. Fig. 5 shows a screen display example of the case of adding a subject. Since a specified subject is "Agenda5", one line is respectively added to the order field 301, the subject field 302 and the scheduled proceeding time field 303 and the sixth agenda can be inputted. Conference time to which scheduled proceeding time of the added agenda is added is displayed in the total time field 304. In addition, when the halfway line is specified and the subject addition button 305 is depressed, one line is inserted into lower portion of the line.

Next, in the case of changing order of a subj ect in progress of a proceeding, when an operator having chairman authority displays the timetable shown in Fig. 3 on the display unit 20 by a predetermined operation and depresses the upward movement button 306 of a subject in a selected line, the order and time change part 15 moves an agenda of the specified line to an upper portion by one line. Fig. 6 shows a screen display example of the case of changing order by upward moving a subj ect. Since a specified subject is "Agenda4", the fourth agenda moves upward and the third agenda moves downward and thus order of the subj ect is changed.

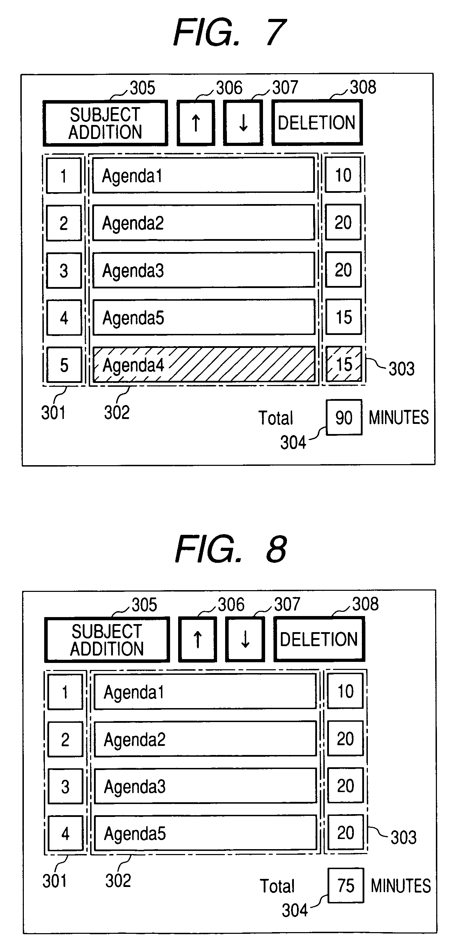

Similarly, when the downward movement button 307 of a subject is depressed in a selected line, the order and time change part 15 moves an agenda of the specified line to a lower portion by one line. Fig. 7 shows a screen display example of the case of changing order by downward moving a subject. Since a specified subject is "Agenda4", the fourth agenda moves downward and the fifth agenda moves upward and thus order of the subject is changed.

Then, in the case of deleting an arbitrary subject in progress of a proceeding, when an operator having chairman authority displays the timetable shown in Fig. 3 on the display unit 20 by a predetermined operation and depresses the deletion button 308 of a subject in a selected line, the order and time change part 15 deletes an agenda of the specified line. Fig. 8 shows a screen display example of the case of deleting a subject. Since a specified subject is "Agenda4", the fourth agenda is deleted and the fifth agenda moves upward by one line and thus is changed to the fourth subject.

Then, returning to the flowchart of Fig. 2, when the order or time, etc. of a proceeding are not changed in step S106, the flowchart returns to step S103 and the progress display control part 12 again displays a progress state of proceeding on the display unit 20.

On the other hand, when the shift to the next subject is detected in step S105 (Y), the progress check part 13 further determines the presence or absence of the remaining subject (step S108). When the remaining subject is present (Y), the scheduled time adjustment part 14 determines whether or not time adjustment is required with respect to the remaining subject before displaying a progress state of proceeding about the next subject (step S109). When the proceeding is progressing as scheduled, the time adjustment is not required, but the case of requiring the adjustment includes, for example, the case where the previous proceeding ends in excess of the scheduled time or the case where the proceeding ends earlier than the schedule in reverse.

For example, when an operator having chairman authority depresses a "subject end button" at a point in time when the progress state indicator 400 of Fig. 4 reaches the display state b, the progress check part 13 decides that the first proceeding ends (step S105 (Y)) and can shift to the second subject (step S108(Y)), and the scheduled time adjustment part 14 decides that time adjustment is not required with respect to the remaining subject (step S109(N)). Therefore, bar display of a progress state is started in a field of the second subject as shown in the display state c (step S103). On the other hand, when the proceeding then ends in excess of the scheduled time in the second subject as shown in the display state d, the scheduled time adjustment part 14 decides that time adjustment is required with respect to the remaining subject (step S109 (Y)).

Then, when the timetable is corrected during the conference (step S107) or when it is determined that time adjustment is required in the remaining subject in the case of shifting to the next subj ect (step S105 (Y)→step S108 (Y)→step S109(N)), the scheduled time adjustment part 14 performs scheduled proceeding time automatic adjustment processing (step S110).

The scheduled proceeding time automatic adjustment processing will be described herein in detail. Particularly, the case where the proceeding end of a subject delays and the case where a proceeding ends early will be described below.

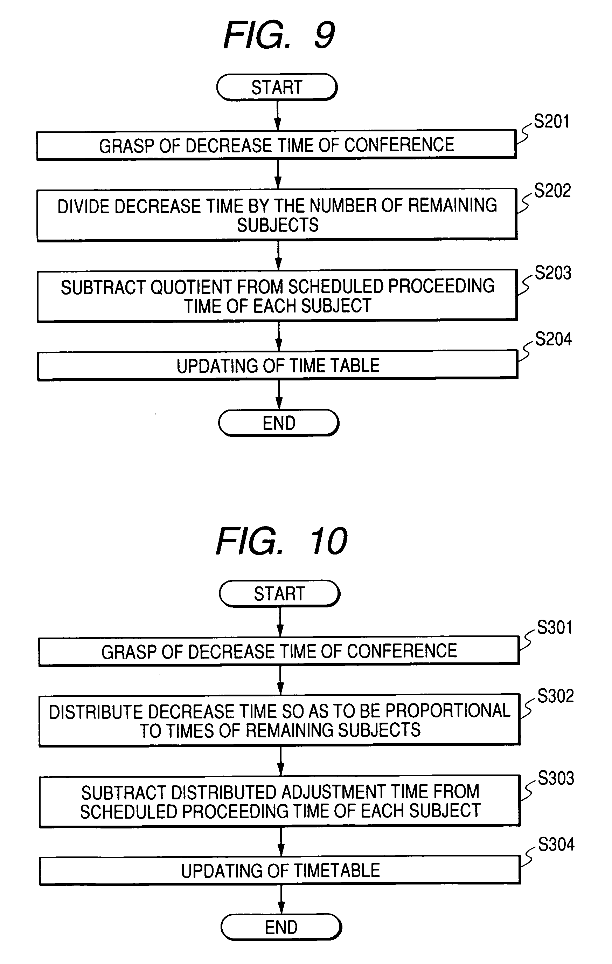

First, when the end of a proceeding of an arbitrary subj ect delays, the scheduled time adjustment part 14 automatically adjusts scheduled proceeding times of the remaining subjects in order to end a conference on time. Figs. 9 to 14 are flowcharts showing a scheduled proceeding time adjustment procedure of the case where scheduled proceeding times of the remaining subjects decrease.

In a scheduled proceeding time adjustment example shown in the flowchart of Fig. 9, for example, when the second subject ends proceeding in excess of a schedule by 3 minutes as shown in the display state d of Fig. 4, the scheduled time adjustment part 14 first grasps decrease time of a conference (step S201) . Since the decrease time is 3 minutes, the scheduled time adjustment part 14 next divides the decrease time by the number of remaining subjects (step S202). Since the number of remaining subjects is 3 ("Agenda3" to "Agenda5"), the quotient becomes 3÷3=1.

Then, the scheduled time adjustment part 14 subtracts the quotient of 1 minute which is adjustment time from scheduled proceeding time of each of the subjects (step S203). Since scheduled proceeding time of "Agenda3" is 20 minutes and scheduled proceeding time of "Agenda4" is 15 minutes and scheduled proceeding time of "Agenda5" is 25 minutes as shown in the timetable of Fig. 3, the scheduled proceeding times after the subtraction become 19 minutes, 14 minutes, 24 minutes, respectively. Finally, the scheduled time adjustment part 14 reflects a result of computation and updates the timetable (step S204). In the case of making the adjustment described above, conference end time can be achieved as originally scheduled.

Then, in a scheduled proceeding time adjustment example shown in the flowchart of Fig. 10, for example, when the second subject ends proceeding in excess of a schedule by 3 minutes as shown in the display state d of Fig. 4, the scheduled time adjustment part 14 first grasps decrease time of a conference (step S301). Since the decrease time is 3 minutes, the scheduled time adjustment part 14 next distributes the decrease time so as to be proportional to scheduled proceeding times of the remaining subjects (step S302). Since scheduled proceeding time of "Agenda3" is 20 minutes and scheduled proceeding time of "Agenda4" is 15 minutes and scheduled proceeding time of "Agenda5" is 25 minutes as shown in the timetable of Fig. 3, a ratio of the scheduled proceeding times is 4 : 3 : 5, so that the distributed times become 1 minute, 45 seconds, 1 minute and 15 seconds, respectively.

Then, the scheduled time adjustment part 14 subtracts each of the distributed adjustment times from scheduled proceeding time of each of the subjects (step S303). The scheduled proceeding times after the subtraction become 19 minutes, 14 minutes and 15 seconds, 23 minutes and 45 seconds, respectively. Finally, the scheduled time adjustment part 14 reflects a result of computation and updates the timetable (step S304). In the case of making the adjustment described above, conference end time can be achieved as originally scheduled.

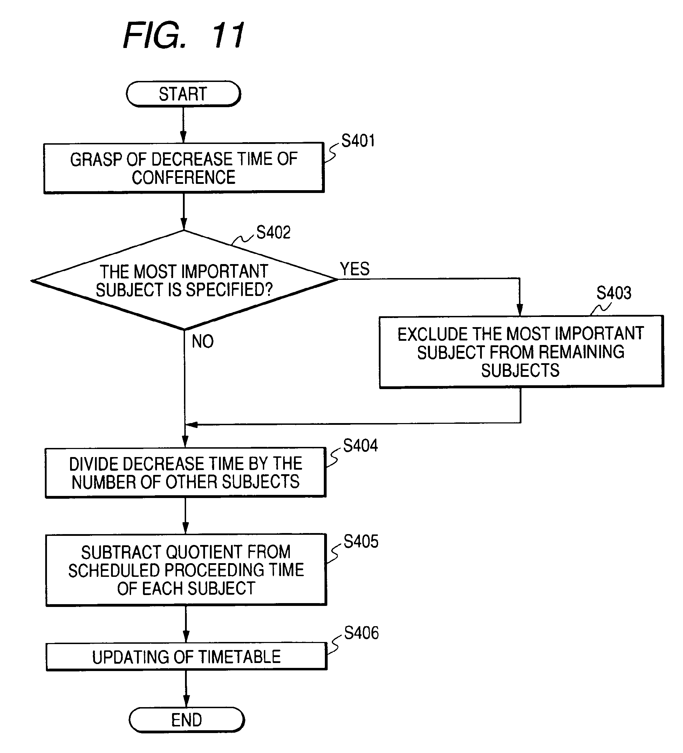

Then, in a scheduled proceeding time adjustment example shown in the flowchart of Fig. 11, for example, when the second subject ends proceeding in excess of a schedule by 3 minutes as shown in the display state d of Fig. 4, the scheduled time adjustment part 14 first grasps decrease time of a conference (step S401). Further, the scheduled time adjustment part 14 determines whether or not there is a subj ect previously specified as the most important subj ect among the remaining subj ects (step S402). In specification of the most important subject, for example, it is preferable to be constructed so that the most important subj ect can be previously speci fied by a predetermined operation in the case of setting a timetable. When the most important subject is specified (Y), the most important subject is excluded (step S403) and the decrease time is divided by the number of remaining subjects other than the most important subject (step S404).

For example, when "Agenda5" is set as the most important subj ect in the timetable of Fig. 3, the remaining subjects other than the most important subj ect are two ("Agenda3" and "Agenda4"), so that the quotient becomes 3÷2=1.5, that is, 1 minute and 30 seconds. Therefore, the scheduled time adjustment part 14 subtracts 1 minute and 30 seconds of the quotient which is adjustment time from scheduled proceeding time of each of the subjects of "Agenda3" and "Agenda4" (step S405). Since scheduled proceeding time of "Agenda3" is 20 minutes and scheduled proceeding time of "Agenda4" is 15 minutes and scheduled proceeding time of "Agenda5" is 25 minutes as shown in the timetable of Fig. 3, the scheduled proceeding times after the subtraction become 18 minutes and 30 seconds, 13 minutes and 30 seconds, 25 minutes, respectively. Finally, the scheduled time adjustment part 14 reflects a result of computation and updates the timetable (step S406). In the case of making the adjustment described above, conference end time can be achieved as originally scheduled.

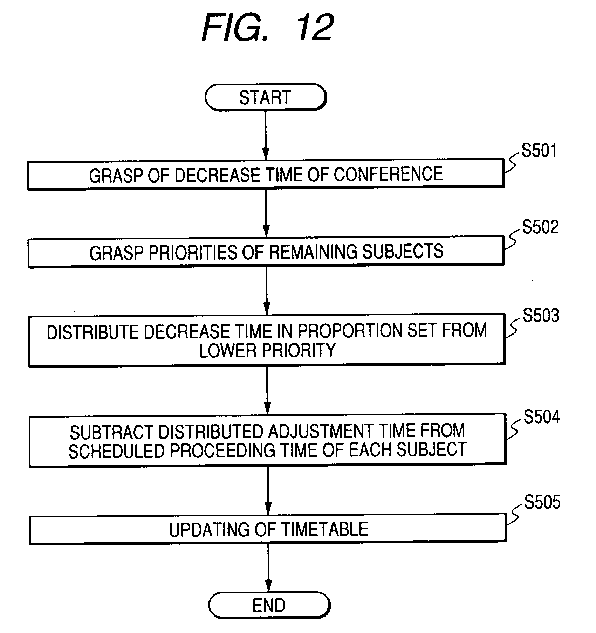

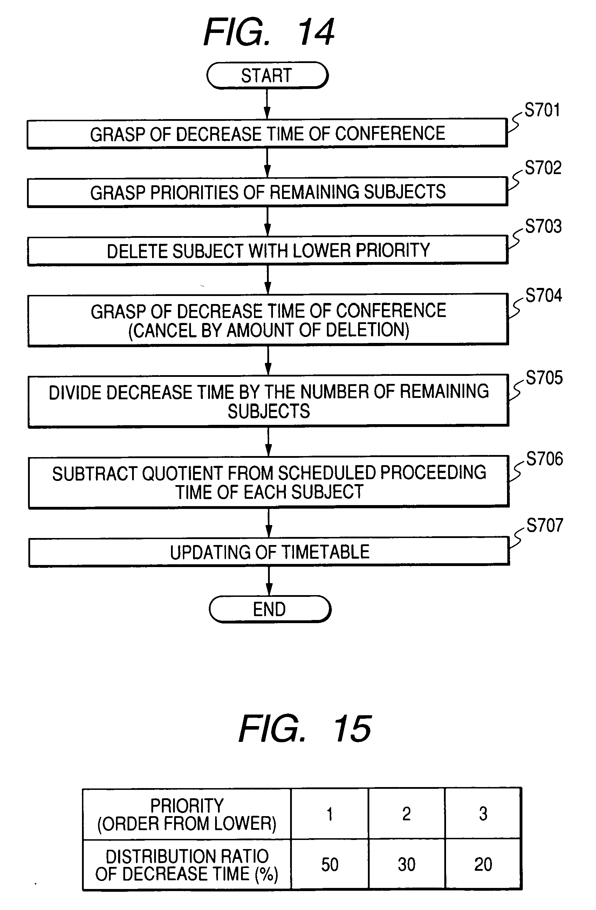

Then, in a scheduled proceeding time adjustment example shown in the flowchart of Fig. 12, for example, when the second subject ends proceeding in excess of a schedule by 3 minutes as shown in the display state d of Fig. 4, the scheduled time adjustment part 14 first grasps decrease time of a conference (step S501). Further, the scheduled time adjustment part 14 grasps priorities set to the remaining subjects (step S502). When the priorities are specified, the decrease time is distributed in the proportion preset similarly from a subject with a lower priority (step S503). Fig. 15 is a diagram conceptually showing a setting example of a distribution ratio of the decrease time and a priority of a subject. The example of the diagram is set so that, for example, 50 % of the decrease time is distributed to a subject with the lowest priority and 30 % of the decrease time is distributed to a subject with the second lowest priority.

Therefore, for example, when priorities of the remaining subjects in the timetable of Fig. 3 are order of "Agenda3", "Agenda4" and "Agenda5" in a state of the display state d of Fig. 4, the decrease time (3 minutes) is distributed at a ratio of 36 seconds, 54 seconds, 1 minute and 30 seconds, respectively, and the scheduled time adjustment part 14 subtracts the distributed adjustment time from scheduled proceeding time of each of the subjects (step S504). Since scheduled proceeding time of "Agenda3" is 20 minutes and scheduled proceeding time of "Agenda4" is 15 minutes and scheduled proceeding time of "Agenda5" is 25 minutes as shown in the timetable of Fig. 3, the scheduled proceeding times after the subtraction become 19 minutes and 24 seconds, 14 minutes and 06 seconds, 23 minutes and 30 seconds, respectively. Finally, the scheduled time adjustment part 14 reflects a result of computation and updates the timetable (step S505). In the case of making the adjustment described above, conference end time can be achieved as originally scheduled.

In addition, in assignment of the priorities and setting of the distribution ratio of the decrease time, for example, it is preferable to be constructed so that the assignment and the setting can be made previously by a predetermined operation in the case of setting a timetable.

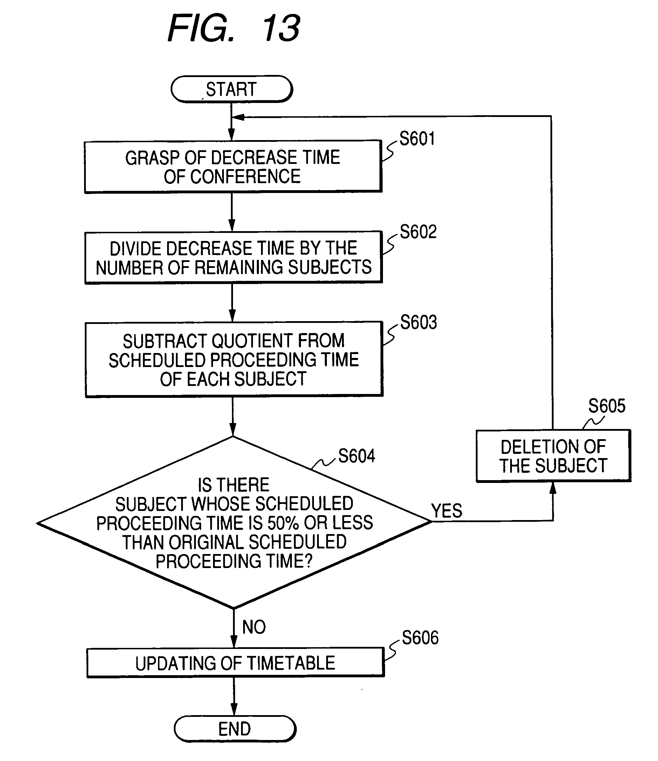

Then, in a manner similar to the procedure from step S201 to step S203 in the flowchart of Fig. 9, in a scheduled proceeding time adjustment example shown in the flowchart of Fig. 13, the scheduled time adjustment part 14 first divides decrease time by the number of remaining subjects and subtracts adjustment time from scheduled proceeding time of each of the subjects (step S601 to step S603). Further, the scheduled time adjustment part 14 determines whether or not there is a subject whose scheduled proceeding time becomes 50 % or less than the original scheduled proceeding time (step S604).

In addition, a criterion of the determination is based on an idea of being excluded from the subjects by deciding that sufficient discussion cannot be held when the scheduled proceeding time becomes 50 % or less. Also, the ratio of 50 % may be set at a different ratio properly.

When there is a subject whose scheduled proceeding time becomes 50 % or less (Y), the scheduled time adjustment part 14 deletes (cancels) the subj ect by deciding that the importance becomes low (step S605). Since surplus time by the subject is generated by the deletion, the scheduled time adjustment part 14 returns to step S601, and grasps conference decrease time in which the surplus time is canceled out, and again calculates adjustment time of each of the subjects. Further, a result of computation is reflected to update the timetable (step S606). In the case of making the adjustment described above, conference end time can be achieved as originally scheduled.

Then, in a manner similar to the procedure from step S501 to step S502 in the flowchart of Fig. 12, in a scheduledproceeding time adjustment example shown in the flowchart of Fig. 14, the scheduled time adjustment part 14 first grasps decrease time and priorities set to the remaining subjects (step S701 to step S702). Then, a subject with a low priority is deleted by deciding that the importance is low (step S703).

Since surplus time by the subject is generated by the deletion, the scheduled time adjustment part 14 again grasps conference decrease time in which the surplus time is canceled out (step S704) and divides the decrease time by the number of remaining subjects (step S705). Then, the scheduled time adjustment part 14 subtracts the quotient which is adjustment time from scheduled proceeding time of each of the subjects (step S706) and reflects a result of computation and updates the timetable (step S707). In the case of making the adjustment described above, conference end time can be achieved as originally scheduled.

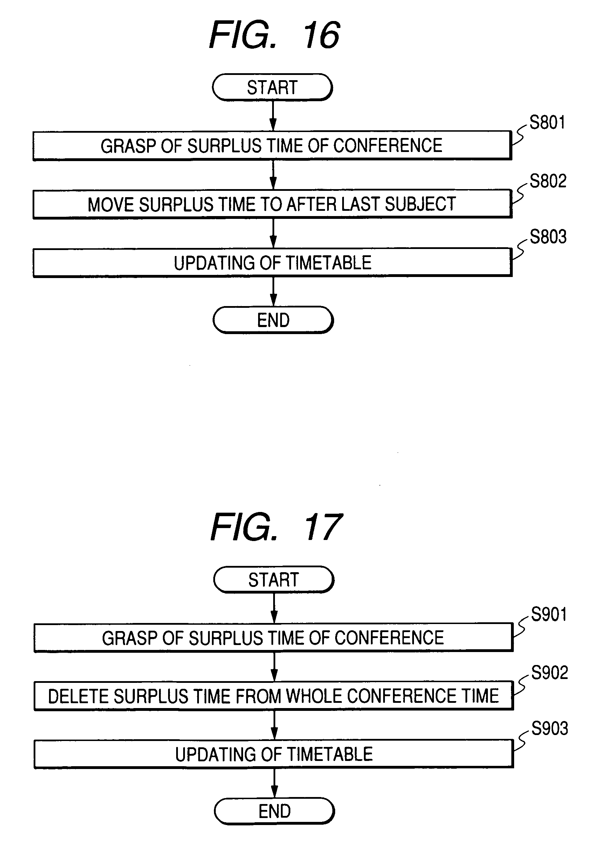

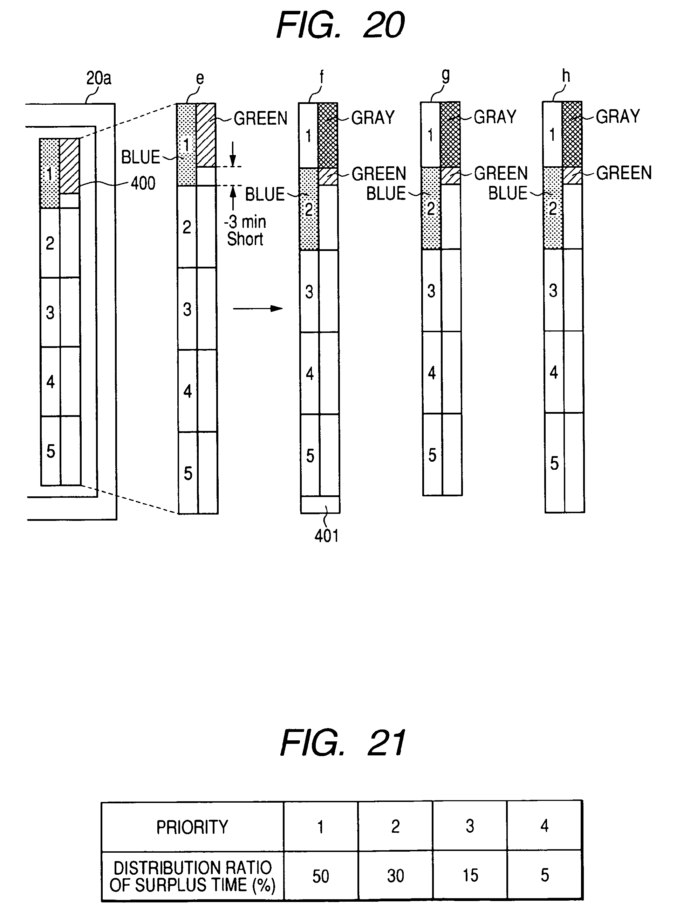

Next, when an arbitrary subject ends proceeding early, the scheduled time adjustment part 14 also automatically adjusts scheduled proceeding times of the remaining subjects properly. Figs. 16 to 19 are flowcharts showing a scheduled proceeding time adjustment procedure of the case where a surplus is generated in scheduled proceeding times of the remaining subjects. Fig. 20 is another display example of the progress management screen of proceeding of Fig. 4, and is a schematic diagram showing display states e to h of a progress state indicator 400.

In a scheduled proceeding time adjustment example shown in the flowchart of Fig. 16, for example, when the first subject ends proceeding earlier than a schedule by 3 minutes as shown in the display state e of the progress state indicator 400 shown in Fig. 20, the scheduled time adjustment part 14 first grasps surplus time of a conference (step S801). Since the surplus time is 3 minutes, the scheduled time adjustment part 14 next moves the surplus time to after the last subject (step S802). The surplus time is secured as spare time of the case of causing delay in proceedings of the remaining subjects. A display example of the progress management screen of proceeding in this case is in the display state f of Fig. 20. Finally, the scheduled time adjustment part 14 reflects a result of processing and updates the timetable (step S803). In the case of making the adjustment described above, conference end time can be achieved as originally scheduled for expedient purposes.

Then, in a scheduled proceeding time adjustment example shown in the flowchart of Fig. 17, for example, when the first subject ends proceeding earlier than a schedule by 3 minutes as shown in the display state e of the progress state indicator 400 shown in Fig. 20, the scheduled time adjustment part 14 first grasps surplus time of a conference (step S901). Since the surplus time is 3 minutes, the scheduled time adjustment part 14 next deletes the surplus time from scheduled proceeding time of the whole conference (step S902). A display example of the progress management screen of proceeding in this case is in the display state g of Fig. 20. Finally, the scheduled time adjustment part 14 reflects a result of processing and updates the timetable (step S903). In the case of making the adjustment described above, effective use of time can be made by achieving conference end time ahead of the original schedule.

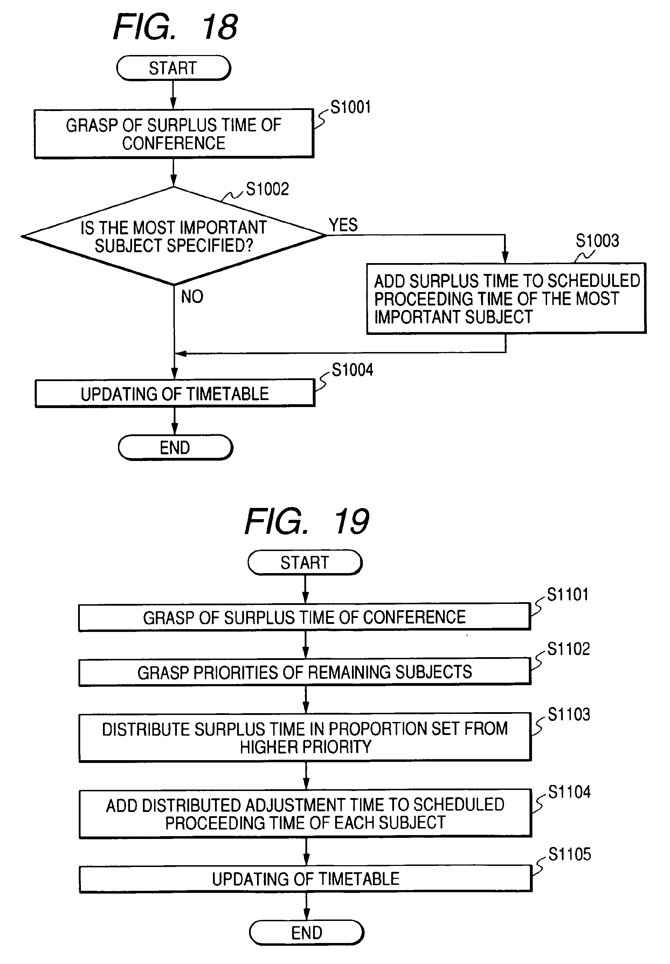

Then, in a scheduled proceeding time adjustment example shown in the flowchart of Fig. 18, for example, when the first subject ends proceeding earlier than a schedule by 3 minutes as shown in the display state e of the progress state indicator 400 of Fig. 20, the scheduled time adjustment part 14 first grasps surplus time of a conference (step S1001). Next, the scheduled time adjustment part 14 determines whether or not there is the most important subject among the remaining subjects (step S1002). For example, when there is the most important subject among the remaining subjects ("Agenda2" to "Agenda5") and the most important subject is "Agenda5", the scheduled time adjustment part 14 adds the surplus time to scheduledproceeding time of the most important subject (step S1003). Since scheduled proceeding time of "Agenda5" is 25 minutes as shown in the timetable of Fig. 3, the scheduled proceeding time to which 3 minutes of the surplus time are added becomes 28 minutes. A display example of the progress management screen of proceeding in this case is in the display state h of Fig. 20. Finally, the scheduled time adjustment part 14 reflects a result of processing and updates the timetable (step S1004). In the case of making the adjustment described above, the surplus time is allocated to the most important subject which expectedly requires a long time and is important, and conference end time can be achieved as originally scheduled.

In addition, when there is not the most important subject among the remaining subj ects ((N) in step S1002), the timetable is updated according to preset rules, for example, the surplus time is added to the next subject, or the surplus time is added to the last subject, or the surplus time is distributed to the remaining subjects at a predetermined ratio.

Then, in a scheduled proceeding time adjustment example shown in the flowchart of Fig. 19, for example, when the first subject ends proceeding earlier than a schedule by 3 minutes as shown in the display state e of the progress state indicator 400 of Fig. 20, the scheduled time adjustment part 14 first grasps surplus time of a conference (step S1101). Further, the scheduled time adjustment part 14 grasps priorities set to the remaining subjects (step S1102). When the priorities are specified, the surplus time is distributed in the proportion preset similarly from a subject with a higher priority (step S1103). Fig. 21 is a diagram conceptually showing a setting example of a distribution ratio of the surplus time and a priority of a subject. In the example of the diagram, the remaining subjects are three and it is set so that, for example, 50 % of the surplus time is distributed to a subject with the highest priority and 30 % of the surplus time is distributed to a subject with the second highest priority.

Therefore, for example, when priorities of the remaining subjects in the timetable of Fig. 3 are order of "Agenda2", "Agenda3", "Agenda4" and "Agenda5" in the display state e of the progress state indicator 400 of Fig. 20, the scheduled time adjustment part 14 distributes the surplus time (3 minutes) to 1 minute and 30 seconds, 54 seconds, 27 seconds, 9 seconds at the ratio (50 %, 30 %, 15 %, 5 %) shown in Fig. 21, and adds the distributed adjustment time to scheduled proceeding time of each of the subjects (step S1104). Since scheduled proceeding time of "Agenda2" is 20 minutes and scheduled proceeding time of "Agenda3" is 20 minutes and scheduled proceeding time of "Agenda4" is 15 minutes and scheduled proceeding time of "Agenda5" is 25 minutes as shown in the timetable of Fig. 3, the scheduled proceeding times after the addition become 21 minutes and 30 seconds, 20 minutes and 54 seconds, 15 minutes and 27 seconds, 25 minutes and 9 seconds, respectively. Finally, the scheduled time adjustment part 14 reflects a result of computation and updates the timetable (step S1105). In the case of making the adjustment described above, the surplus time is distributed according to importance of the subjects and conference end time can be achieved as originally scheduled.

In addition, in assignment of the priorities and setting of the distribution ratio of the surplus time, for example, it is preferable to be constructed so that the assignment and the setting can be made previously by a predetermined operation in the case of setting a timetable.

Then, returning to the flowchart of Fig. 2, when the scheduled proceeding time automatic adjustment processing describedabove (step S110) is ended, the flowchart again returns to step S103 and a progress state of proceeding is again displayed on the display unit 20. On the other hand, when the remaining subject is absent (N) in the determination of step S108, that is, it is determined that all the subjects of the conference are ended, the control unit 10 determines whether or not proceedings created in the conference are stored (step S111), and in the case of being set so as to store the proceedings (Y), a proceeding screen associated with the subject in step S104, that is, document data or the proceedings, etc. are stored in the data storage 40 (step S112). In addition, as a creation method of proceedings in the conference, a publicly known technique may be used and thus the detailed description is omitted. As described above, a series of the conference ends (step S113).

In addition, in the case of being set so as not to store the proceedings ((N) in the determination of step S111), the conference ends without storing the document data or the proceedings, etc. in the data storage 40 (step S113).

In addition, in the embodiment described above, a length of the indicator 400 displayed on a screen of the display unit 20 may be set equally in each of the subjects or may be set at a different length in proportion to a length of scheduled proceeding time of the subject.

Further, the scheduled proceeding time adjustment procedure of the case where scheduled proceeding times of the remaining subjects decrease as shown in Figs. 9 to 14 or the scheduledproceeding time adjustment procedure of the case where a surplus is generated in the remaining proceeding time as shown in Figs. 16 to 19 may be performed properly in combination. Then, a concrete distribution ratio or a distribution method, etc. of surplus time or excess time, deletion of a subject can be set arbitrarily.

As described in detail with reference to the embodiment, a conference support system 100 for managing progress of a conference about a plurality of conference subjects includes: a display unit 20 that displays a progress of the conference; and a control unit 10 that controls the display unit 20 according to the progress of the conference. The control unit 10 includes : an agenda preparing part 11 that presets scheduled proceeding times necessary for proceedings of the conference subjects and prepares a timetable of the conference; a progress display control part 12 that controls the display unit 20 to display an index indicating elapsed times of the conference subjects; a progress check part 13 that detects an end of the proceeding of each of the conference subjects and controls the display unit 20 to display the index so as to correspond to a next conference subject; and a scheduled time adjustment part 13 that distributes a remaining time to a remaining conference subject when the proceeding of one of the conference subjects ends.

In addition, the "index" includes means for representing a lapse of time by graphics of length, area, color, patterns.

According to the above configuration, since time adjustment is made automatically so that a conference ends within scheduled time, a burden of troublesome work of the time adjustment may be reduced and a chairman can concentrate on the contents of a proceeding and accurately manage progress of proceeding of the conference. Also, since a progress state of the conference can be grasped accurately under any circumstances, a conference participant can contribute to smooth proceeding progress.

In addition, as described in detail with reference to the embodiment, a conference support method for managing a progress of a conference about a plurality of conference subjects includes: presetting scheduled proceeding times necessary for proceedings of the conference subjects andpreparing a timetable of the conference; displaying an index indicating elapsed times of the conference subjects; detecting an end of the proceeding of each of the conference subjects and displaying the index so as to correspond to a next conference subject; and distributing a remaining time to a remaining conference subject when the proceeding of one of the conference subjects ends.

According to the above configuration, since time adj ustment is made automatically so that a conference ends within scheduled time, a burden of troublesome work of the time adjustment is reduced and a chairman can concentrate on the contents of a proceeding and accurately manage progress of proceeding of the conference. Also, since a progress state of the conference can be grasped accurately under any circumstances, a conference participant can contribute to smooth proceeding progress.

Also, as described in detail with reference to the embodiment, a computer program product for enabling a computer to manage progress of conference about a plurality of conference subjects includes: software instructions for enabling the computer to perform predetermined operations, and a computer readable medium bearing the software instructions. The predetermined operations includes: presetting scheduled proceeding times necessary for proceedings of the conference subj ects andpreparing a timetable of the conference; displaying an index indicating elapsed times of the conference subjects; detecting an end of the proceeding of each of the conference subjects and displaying the index so as to correspond to a next conference subject; and distributing a remaining time to a remaining conference subject when the proceeding of one of the conference subjects ends.

According to above configuration, since time adjustment is made automatically so that a conference ends within scheduled time, a burden of troublesome work of the time adjustment is reduced and a chairman can concentrate on the contents of a proceeding and accurately manage progress of proceeding of the conference. Also, since a progress state of the conference can be grasped accurately under any circumstances, a conference participant can contribute to smooth proceeding progress.

The entire disclosure of Japanese Patent Application No. 2005-225601 filed on August 3, 2005 including specification, claims, drawings and abstract is incorporated herein by reference in its entirety.

## Claims

1. A conference support system for managing progress of a conference about a plurality of conference subjects, the conference support system comprising:
a display unit that displays a progress of the conference; and
a control unit that controls the display unit according to the progress of the conference,
wherein the control unit includes:
an agenda preparing part that presets scheduled proceeding times necessary for proceedings of the conference subjects and prepares a timetable of the conference;
a progress display control part that controls the display unit to display an index indicating elapsed times of the conference subjects;
a progress check part that detects an end of the proceeding of each of the conference subjects and controls the display unit to display the index so as to correspond to a next conference subject; and
a scheduled time adjustment part that distributes a remaining time to a remaining conference subject when the proceeding of one of the conference subjects ends.

2. The conference support system according to claim 1, wherein the scheduled time adjustment part reduces the scheduled proceeding time of at least one of the remaining conference subjects when the end of the proceeding of the one of the conference subject exceeds the corresponding scheduled proceeding time.

3. The conference support system according to claim 1, wherein the scheduled time adjustment part cancels at least one of the remaining conference subjects when the end of the proceeding of the one of the conference subjects exceeds the corresponding scheduled proceeding time.

4. The conference support system according to claim 1, wherein the scheduled time adjustment part reduces a time of the conference by an amount of a surplus time when the proceeding of the one of the conference subjects ends within the corresponding scheduled proceeding time.

5. The conference support system according to claim 1, wherein the scheduled time adjustment part prolongs the scheduled proceeding time of at least one of the remaining conference subjects when the proceeding of the one of the conference subjects ends within the corresponding scheduled proceeding time.

6. The conference support system according to claim 1, wherein the control unit further includes an order and time change part that changes at least one of (i) the scheduled proceeding times and (ii) an order of the proceedings of the remaining conference subjects during the conference.

7. The conference support system according to claim 1, wherein the control unit further includes a display association part that associates display data displayed during the proceeding of one of the conference subjects with the one of the conference subjects.

8. A conference support method for managing a progress of a conference about a plurality of conference subjects, the conference support method comprising:
presetting scheduled proceeding times necessary for proceedings of the conference subj ects andpreparing a timetable of the conference;
displaying an index indicating elapsed times of the conference subjects;
detecting an end of the proceeding of each of the conference subjects and displaying the index so as to correspond to a next conference subject; and
distributing a remaining time to a remaining conference subject when the proceeding of one of the conference subjects ends.

9. A computer program product for enabling a computer to manage progress of conference about a plurality of conference subjects comprising:
software instructions for enabling the computer to perform predetermined operations, and
a computer readable medium bearing the software instructions;
the predetermined operations including:
presetting scheduled proceeding times necessary for proceedings of the conference subjects and preparing a timetable of the conference;
displaying an index indicating elapsed times of the conference subjects;
detecting an end of the proceeding of each of the conference subjects and displaying the index so as to correspond to a next conference subject; and
distributing a remaining time to a remaining conference subject when the proceeding of one of the conference subjects ends.
